# EUROPEAN PATENT SPECIFICATION

(11) **EP 3 279 785 B1**
(45) Date of publication and mention of the grant of the patent: **07.10.2020**
(21) Application number: 17184545.6
(22) Date of filing: 02.08.2017
(51) Int. Cl.: G06F 3/0488, G06F 3/0484, G06T 11/60, B64D 43/00, G06F 40/103, G06F 40/109

(54) **FORMATTING TEXT ON A TOUCH SCREEN DISPLAY DEVICE**
FORMATIERUNG VON TEXT AUF EINER BERÜHRUNGSBILDSCHIRMANZEIGEVORRICHTUNG
FORMATAGE DE TEXTE SUR UN AFFICHEUR À ÉCRAN TACTILE

(30) Priority: 03.08.2016 US 201615227003
(43) Date of publication of application: 07.02.2018
(73) Proprietor: GE Aviation Systems LLC, Grand Rapids, MI 49512-1991 (US)
(72) Inventor: FREVILLE, Nicholas David, Grand Rapids, MI 49512 (US)
(74) Representative: Openshaw & Co.

(56) References cited:
- EP-A1- 2 940 571
- US-A1- 2006 001 650
- US-A1- 2014 055 374
- US-A1- 2014 163 983

## Description

### FIELD

The present subject matter relates generally to formatting text on a touch screen display device, and more particularly, to formatting text on a touch screen display device on an aircraft.

### BACKGROUND

Formatting text on a computer can be time and labor intensive. For example, a user may be required to manually perform several steps to format a text input, such as drawing a text field, entering a text input into the text field, rotating the text field to adjust an angular orientation of the text input, and adjusting a format of the text input, such as the font size or font characteristics of the text input. For applications in which a user desires to format multiple text inputs, such as, for example, when labeling multiple objects on a map displayed on a display device, these time and labor requirements can be significant.

EP 2 940 571 A1 describes a mobile terminal and controlling method thereof by which a writing input is facilitated using at least two pointers.

US 2014/163983 describes a display device for converting a voice to a text and displaying the converted text.

US 2006/001650 describes using physical objects to adjust attributes of an interactive display application.

### BRIEF DESCRIPTION

Aspects and advantages of the present disclosure will be set forth in part in the following description, or may be learned from the description, or may be learned through practice of the examples disclosed herein.

One example aspect of the present disclosure is directed to a method of formatting a text input on a touch screen display device on an aircraft. The method can include providing for display, by one or more processors, a user interface on a touch screen display device. The user interface can include a field for receiving one or more touchpoint interactions by a user. The method can further include receiving, by the one or more processors, data indicative of a first touchpoint on the touch screen display device. The method can further include receiving, by the one or more processors, data indicative of a second touchpoint on the touch screen display device. The method can further include determining, by the one or more processors, a formatted textual display based at least in part on the data indicative of the first touchpoint and the data indicative of the second touchpoint. The method can further include displaying, by the one or more processors, the formatted textual display on the touch screen display device.

Another example aspect of the present disclosure is directed to a system for formatting text on a touch screen display device. The system can include a touch screen display device, one or more processors, and one or more memory devices. The one or more memory devices can store instructions that when executed by the one or more processors configure the one or more processors to display a user interface on the touch screen display device. The user interface can include a field for receiving one or more touchpoint interactions by a user. The one or more processors can receive data indicative of a first touchpoint on the touch screen display device. The one or more processors can receive data indicative of a second touchpoint on the touch screen display device. The one or more processors can determine a formatted textual display based at least in part on the data indicative of the first touchpoint and the data indicative of the second touchpoint. The one or more processors can display the formatted textual display on the touch screen display device.

Yet another example aspect of the present disclosure is directed to an aircraft. The aircraft can include a touch screen display device and a computing system comprising one or more processors and one or more memory devices located on an aircraft. The one or more memory devices can store instructions that when executed by the one or more processors cause the one or more processors to display a user interface on the touch screen display device. The user interface can include a field for receiving one or more touchpoint interactions by a user. The one or more processors can receive data indicative of a first touchpoint on the touch screen display device. The one or more processors can further receive data indicative of a second touchpoint on the touch screen display device. The one or more processors can determine whether the second touchpoint is located at a first position relative to the first touchpoint or a second position relative to the first touchpoint. The one or more processors can determine a formatted textual display based at least in part on whether the second touchpoint is in the first position or the second position. The one or more processors can display the formatted textual display on the touch screen display device.

Other example aspects of the present disclosure are directed to systems, methods, aircraft, devices, and non-transitory computer-readable media for formatting a text input on a touch screen display device.

Variations and modifications can be made to these example aspects of the present disclosure.

These and other features, aspects and advantages of various examples will become better understood with reference to the following description and appended claims. The accompanying drawings, which are incorporated in and constitute a part of this specification, illustrate aspects of the present disclosure and, together with the description, serve to explain the related principles.

### BRIEF DESCRIPTION

Detailed discussion of embodiments directed to one of ordinary skill in the art are set forth in the specification, which makes reference to the appended figures, in which:
FIG. 1 depicts a perspective view of an example portion of an aircraft according to example aspects of the present disclosure;
FIG. 2 depicts an schematic of an example interaction with a user interface addressed by the present disclosure;
FIG. 3 depicts a schematic of an example interaction with a user interface according to example aspects of the present disclosure.
FIG. 4 depicts a schematic of an example interaction with a user interface according to example aspects of the present disclosure.
FIG. 5 depicts a schematic of an example interaction with a user interface according to example aspects of the present disclosure
FIG. 6 depicts an example method according to example aspects of the present disclosure.
FIG. 7 depicts an example method according to example aspects of the present disclosure.
FIG. 8 depicts an example system according to example aspects of the present disclosure.

### DETAILED DESCRIPTION

Reference now will be made in detail to embodiments of the invention, one or more examples of which are illustrated in the drawings. Each example is provided by way of explanation of the invention, not limitation of the invention. The invention is as set out in the appended independent claims, with preferred embodiments set out in the appended dependent claims. Any embodiments that do not fall within the scope of the claims are to be considered mere examples. However, it will be apparent to those skilled in the art that various modifications and variations can be made in the present invention without departing from the scope of the appended claims. Thus, it is intended that the present invention covers such modifications and variations as come within the scope of the appended claims.

Example aspects of the present disclosure are directed to systems and methods for formatting text on a touch screen display device. Touch screen display devices can be used by users to enter information and interact with a computing system in a variety of applications. For example, flight crew members on an aircraft can use touch screen display devices to input and review data and flight conditions during operation of the aircraft. A user interface can be displayed on the touch screen display device, which can allow a flight crew member to make selections or enter information by touching the touch screen display device with, for example, a finger or a stylus.

A user of a computing system, such as a flight crew member on an aircraft, may desire to format text displayed on a screen of the computing system. For example, a user of a computing system may desire to format text to be used in a computer-generated graphic or a user interface of a program executed on the computing system.

During operation of an aircraft, a flight crew member may desire to format text to be displayed on a screen. For example, a flight crew member may desire to add a marker to a map displayed on a screen to indicate a waypoint for a flight path or an area to be avoided, such as an area experiencing a weather disturbance.

A typical approach to formatting text on a display device can be time consuming, as it may require a user to manually enter and/or alter several aspects of the text in order to format the text in the desired manner. For example, a user may need to first create a text box, such as by manually drawing a text field with an input device, such as with a mouse or other input device. The user may then need to enter the text to be displayed into the text box, such as with a keyboard, voice-recognition software, or an on-screen display. If the user desires the text to be oriented at an angle, such as, for example, if the user desires to indicate a particular direction or to fit the text into a particular area on the display, the user may need to manually adjust the orientation of the text input. In a typical application, this can be accomplished by selecting the text box, selecting an angular rotation feature of the text box, and manually rotating the text box to the desired angle. Additionally, the user may need to manually adjust the format of the text, such as the font size or a font characteristic in order to achieve a preferred appearance or to fit the text input into a particular area on the display. As used herein, the phrase "font characteristic" refers to any displayed characteristic of a text input, such as a font type (e.g., Arial or Times New Roman), a font style (e.g., bold, italic, underline), a font effect (e.g., strikethrough, superscript), or any other visual characteristic of a text input. For example, a flight crew member may prefer that a text input marker on a flight map is sized such that it fits within a particular area on the flight map but is formatted such that it is readily visible to the flight crew member. This can require, for example, adjusting a font size, a font type, and a font style. Each step that a user, such as a flight crew member, performs to angle, size, and format a text input can increase the time required to achieve the desired formatted text appearance. Further, in instances where multiple text inputs are desired by the user, the time requirements can be further increased due to interactions of the various text inputs, such as when two or more text inputs overlap.

The systems and methods according to example aspects of the present disclosure can allow for formatting of a text input on a touch screen display device, potentially saving time and reducing inefficiencies associated with formatting a text input. For example, the systems and methods can provide a user interface on a touch screen display device, such as a touch screen display device in a cockpit. The user interface can be, for example, a field for receiving touchpoint interactions by a user. The user can enter a text input to be displayed on the touch screen display device by, for example, using a keyboard input to type the text. The user can then format the text by touching the touch screen display device at two touchpoints.

A processor can be configured to receive data indicative of a first touchpoint and data indicative of a second touchpoint. For example, when a user, such as a flight crew member, touches the touch screen display device at a first touchpoint, the processor can receive data indicative of the first touchpoint interaction. Likewise, the processor can receive data indicative of a second touchpoint interaction, such as when a flight crew member touches the touch screen display device at a second touchpoint.

The processor can be further configured to determine a formatted textual display based on the data indicative of the first touchpoint and the data indicative of the second touchpoint. For example, the processor can determine whether the second touchpoint is in a first position relative to the first touchpoint, or whether the second touchpoint is in a second position relative to the first touchpoint. The first position can be, for example, a position to the left of the first touchpoint, and the second position can be, for example, a position not to the left of the first touchpoint, such as any position directly above, directly below, or to the right of the first touchpoint. Each touchpoint can be associated with a value along a horizontal axis. For example, a first touchpoint can be associated with a first value along a horizontal axis, and a second touchpoint can be associated with a second value along a horizontal axis. The processor can be configured to determine whether the second touchpoint is in the first position or the second position relative to the first touchpoint by, for example, comparing the first value to the second value. For example, if the second value is less than the first value, the processor can determine that the second touchpoint is in the first position relative to the first touchpoint (e.g., to the left), whereas if the second value is greater than or equal to the first value, the processor can determine that the second touchpoint is in the second position relative to the first touchpoint (e.g., above, below, or to the right).

Based on whether the second touchpoint is in the first position or the second position, the processor can determine a formatted textual display. For example, when the second touchpoint is in the first position, (e.g., to the left), the processor can remove the text input from the formatted text input. This can be useful, for example, when a user enters a text input, but decides that they either want to delete or hide the text input. The user can select the text input, and using two touchpoint interactions on the touch screen display device, such as, for example, by touching the touch screen display device at a first touchpoint and then touching the touch screen display device at a second touchpoint to the left of first touchpoint, the user can hide or delete the text, thereby removing the text input from the formatted textual display.

Alternatively, when the second touchpoint is in the second position relative to the first touchpoint, the processor can format the text input and display the formatted text input in a formatted textual display on the touch screen display device. For example, each touchpoint can be associated with a coordinate pair on a horizontal axis and a vertical axis, such as a first coordinate pair for the first touchpoint and a second coordinate pair for the second touchpoint. The processor can determine an angular orientation of the text input based on data indicative of the first touchpoint and data indicative of the second touchpoint. For example, the processor can orient the text input along a line extending from the first coordinate pair to the second coordinate pair. Further, the processor can determine a format of the text of the text input based on data indicative of the first touchpoint and data indicative of the second touchpoint. For example, the processor can determine a format of the text input based on the distance between the first touchpoint and the second touchpoint, such as, for example, by determining a font size or font characteristic such that the text input is sized to fit within the two touchpoints.

The processor can further be configured to display the formatted textual display on the touch screen display device. For example, once the processor has determined an angular orientation, a font size, and any font characteristics, the processor can display the formatted text input in a formatted textual display on the touch screen display device.

In this way, the systems and methods according to example aspects of the present disclosure can allow for the formatting of text inputs on a touch screen display device, and more particularly, a touch screen display device on an aircraft. The example systems and methods of the present disclosure can have a technical effect of reducing the time and labor needed to format text inputs on a screen, thereby reducing user frustration and increasing efficiencies associated with formatting text inputs on touch screen display devices.

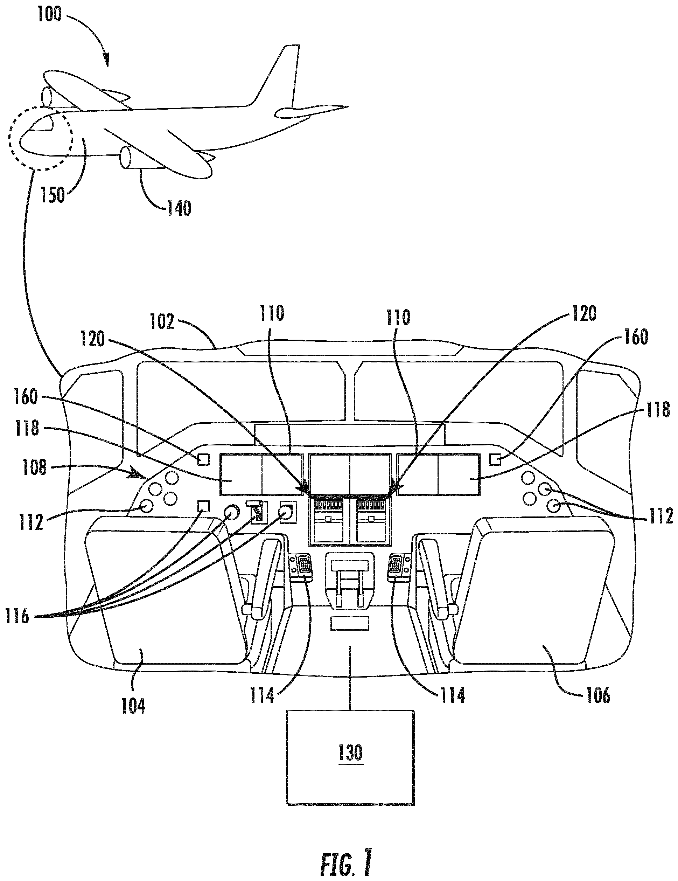

With reference now to the FIGS., example embodiments of the present disclosure will be discussed in further detail. FIG. 1 depicts a perspective view of an example portion of an aircraft 100 according to example embodiments of the present disclosure. The aircraft 100 can include, for instance, a cockpit 102, an engine 140, and a fuselage 150. A first user (e.g., a first flight crew member, a pilot) can be present in a seat 104 at the left side of the cockpit 102 and another user (e.g., a second flight crew member, a co-pilot) can be present at the right side of the cockpit 102 in a seat 106. The aircraft 100 can include a flight deck 108, which can include one or more multifunctional flight display devices 110, which can be one or more touch screen display devices 118. The aircraft can also include one or more instruments 112. In some implementations, the one or more instruments 112 can be located on the flight deck 108 in front of the one or more users and can provide information to aid in flying the aircraft 100.

Aircraft 100 can include one or more physical control interfaces 116. A physical control interface 116 can be, for example, a control interface that is configured to adjust a setting, parameter, mechanism, and/or condition of the aircraft 100. The physical control interfaces 116 can include, for instance, a button, momentary push button, compressible button, a switch mechanism, sliding control, level, knob, gauge, etc.

The aircraft 100 can include one or more aircraft input devices 114 (e.g., in the cockpit 102) that can be used by one or more users to provide input to one or more processors and interact with the systems of the aircraft 100. The aircraft input devices 114 can include, for instance, any device suitable to accept input from a user and to convert that input to a graphical position on any of the multiple flight display screens 110. For instance, the one or more aircraft input devices 114 can include a joystick, multi-way rocker switches, mouse, trackball, keyboard, touch screen, touch pad, data entry keys, a microphone suitable for voice recognition, or any other suitable device. In some implementations, each user can have one or more separate aircraft input devices 114. Through use of the aircraft input devices 114, the one or more users can interact with the graphic and/or textual data elements provided for display on the screens of the display devices 110.

One or more user interfaces 120 can be displayed on the one or more display devices 110, including one or more touch screen display devices 118. For availability, one or more of the user interfaces 120 can be provided by a display device 110 on each side of the flight deck 108. In some implementations, one or more of the display devices 110 can be touch screen display devices 118 that can allow a user to visualize the user interface 120 on the touch screen display device 118 and interact with the user interface 120 through the touch screen display device 118. Additionally and/or alternatively, one or more of the display devices 110 can be operably coupled with the input devices 114 such that a user can interact with the user interface 120 (e.g., cursor interaction via trackball, mouse, etc.) and the textual and/or graphical elements included in the user interface 120.

According to example aspects of the present disclosure, the user interface 120 can include a field for receiving one or more touchpoint interactions by a user, which can be displayed on a touch screen display device 118. A user, such as a flight crew member, can interact with the user interface 120 by, for example, touching the touch screen display device 118 at one or more touchpoint locations with an input device, such as with a stylus or the user's finger. As used herein, the term "stylus" refers to any object used by a user, such as a flight crew member, to interact with a touch screen display device 118, and can include, without limitation, a capacitive stylus, a Wacom digitizer, a Bluetooth enabled stylus, a writing instrument, or any other device used to interact with a touch screen display device 118.

The one or more display devices 110, including one or more touch screen display devices 118, can be configured to be in wired and/or wireless communication with a control system 130. For instance, in some implementations, a touch screen display device 118 can communicate with the control system 130 via a communication network. The communication network can include a data bus or combination of wired and/or wireless communication links, such as a SATCOM network, VHF network, a HF network, a Wi-Fi network, a WiMAX network, a gatelink network, and/or any other suitable communication network for transmitting data. The one or more touch screen display devices 118 can be configured to receive one or more user touchpoint interactions with the user interface 120 and to provide data indicative of user touchpoint interactions to the control system 130. For instance, a user can interact with a touch screen display device 118 by touching the touch screen display device 118 at one or more touchpoint locations. One or more of the touch screen display devices 118 can send data indicative of the touchpoint interaction with the user interface 120 to the control system 130. The control system 130 can be configured to receive data indicative of the touchpoint interaction. For example, a control system 130 can receive data indicative of a first touchpoint interaction and data indicative of a second touchpoint interaction.

In response to receiving the data indicative of a first touchpoint interaction and data indicative of a second touchpoint the control system 130, and more particularly, a processor in the control system 130, can be configured to determine a formatted textual display to be displayed on a touch screen display device 118.

In response to determining the formatted textual display, the control system 130 can be configured to send one or more signals (e.g., command signals) to the touch screen display device 118 to display the formatted textual display. The control system 130 can be in wired or wireless communication with the touch screen display device 118. Additionally, and/or alternatively, the control system 130 can be configured to communicate with the touch screen display device 118 via a communication network.

In response to receiving the one or more command signals, the touch screen display device 118 can display the formatted textual display. For instance, in response to receiving one or more command signals to display a formatted text input, the touch screen display device 118 can display the formatted textual display. For instance, the formatted textual display can be a map, such as a flight map, with a formatted text input overlaying the map.

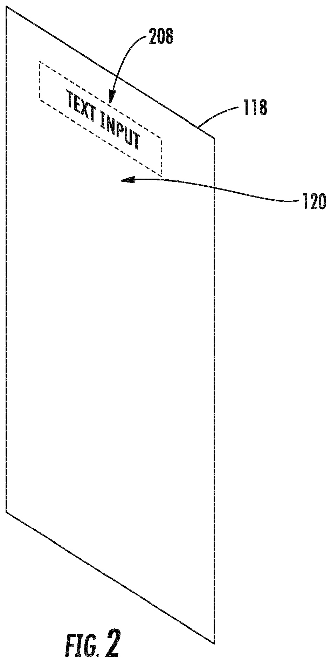

Referring now to FIG. 2, a schematic of an example interaction with a user interface is provided. As depicted, a user interface 120 is displayed on a touch screen display device 118. The user interface 120 can include a field for receiving one or more touchpoint interactions. Further, the user interface 120 can display one or more text inputs 208. For example, as depicted, a single text input 208 is shown. The text input 208 can be input by a user, such as a flight crew member. For example, a flight crew member can use one or more aircraft input devices 114 (e.g., a keyboard, on-screen menu, or voice recognition software) as discussed with reference to FIG. 1 to enter a text input 208 to be displayed on the user interface 120. In an embodiment, the text input 208 can be displayed in area of the user interface 120 specified by a user. Additionally and/or alternatively, the text input 208 can be displayed at a pre-determined location on the user interface 120. The pre-determined location can be, for instance, a default location.

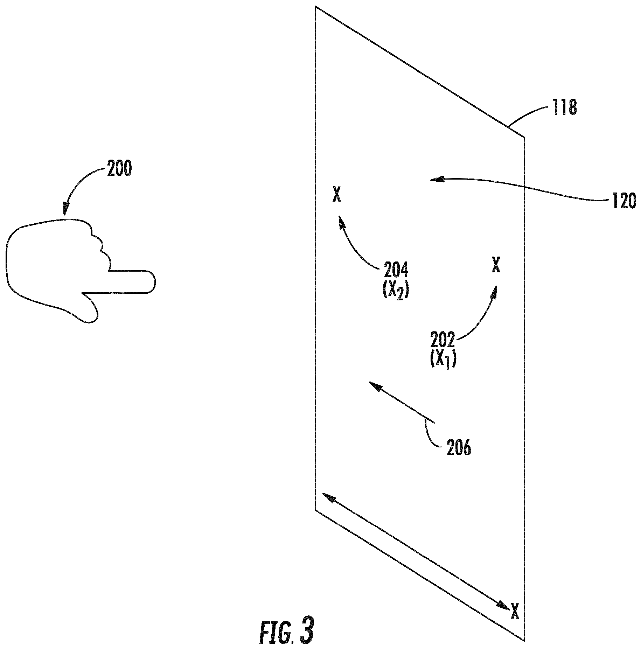

Referring now to FIG. 3, a schematic of an example interaction with a user interface according to example aspects of the present disclosure is provided. Elements that are the same or similar to those shown in FIG. 2 are referred to with the same reference numerals. As depicted, a user interface 120 is displayed on a touch screen display device 118. As shown, a user 200 can interact with the user interface 120 on the touch screen display device 118 by touching the touch screen display device 118 at one or more touchpoint locations. For example, a user 200 can touch the touch screen display device 118 at a first touchpoint 202 located on the user interface 120. The first touchpoint 202 can be, for example, a touchpoint interaction with the touch screen display device 118 occurring at a first point in time. The first touchpoint 202 can be associated with, for example, a location on a horizontal and/or vertical axis. For example, the first touchpoint can be associated with a first value X₁. When the user touches the first touchpoint 202, the touch screen display device 118 can be configured to send data indicative of the first touchpoint 202 to one or more processors, such as a processor in a control system 130. For example, the touch screen display device can be configured to send a first value X₁ associated with the first touchpoint 202 to a processor, and the processor can be configured to receive the first value X₁.

Similarly, a user 200 can touch the touch screen display device 118 at a second touchpoint 204 located on the user interface 120. The second touchpoint can be, for example a second touchpoint interaction with the touch screen display device 118 occurring at a second point in time that occurs after the first point in time. The second touchpoint can be associated with a second value X₂. When the user touches the second touchpoint 204, the touchscreen display device 118 can be configured to send data indicative of the second touchpoint 204 to one or more processors, such as a processor in a control system 130. For example, the touch screen display device can be configured to send a second value X₂ associated with the second touchpoint 204 to a processor, and the processor can be configured to receive the second value X₂.

The processor can be configured to determine a formatted text input to be displayed in a formatted textual display based on the data indicative of the first touchpoint and the data indicative of the second touchpoint. For example, a processor can be configured to determine whether the second touchpoint 204 is in a first position relative to the first touchpoint 202, or whether the second touchpoint 204 is in a second position relative to the first touchpoint 204. The first position can be, for example, a position to the left of the first touchpoint, and a second position can be, for example, a position not to the left of the first touchpoint 202, such as a position directly above, directly below, or to the right of the first touchpoint 202. Additionally and/or alternatively, the first position and the second position can be any other configuration of positions relative to the first touchpoint, such as above, below, or to the right.

As depicted in FIG. 3, the second position 204 is located to the left of the first position 202, as shown by the directional arrow 206 which indicates the direction of the second touchpoint 204 relative to the first touchpoint 202. The one or more processors, such as one or more processors in a control system 130, can be configured to determine whether the second touchpoint 204 is in the first position or the second position by, for example, comparing the first value X₁ to the second value X₂. For example, if the second value X₂ is less than the first value X₁, the processor can determine that the second touchpoint 204 is in the first position (e.g., to the left of the first touchpoint 202), whereas when the second value X₂ is greater than or equal to the first value X₁, the processor can determine that the second touchpoint 204 is in the second position (e.g., not to the left of the first touchpoint 202). In this way, the processor can determine the relative position of the second touchpoint 204 to the first touchpoint 202.

Further, the one or more processors, such as one or more processors in a control system 130, can be configured to determine a formatted textual display based on whether the second touchpoint 204 is in the first position or the second position. For example, the one or more processors can be configured to remove the text input 208 from the formatted textual display when the second touchpoint is located at the first position relative to the first touchpoint 202. For example, as shown in FIG. 3, the second touchpoint 204 is to the left of the first touchpoint 202, as indicated by the directional arrow 206. As can be seen in FIG. 3, the text input 208 shown in FIG. 2 has been removed from formatted textual display shown on the user interface 120. The one or more processors can be configured to remove the text input 208 by, for example, deleting the text input or hiding it from view. The one or more processors can be further configured to send a command to the touch screen display device 118 to display the formatted textual display wherein the text input 208 has been removed, as shown in FIG. 3.

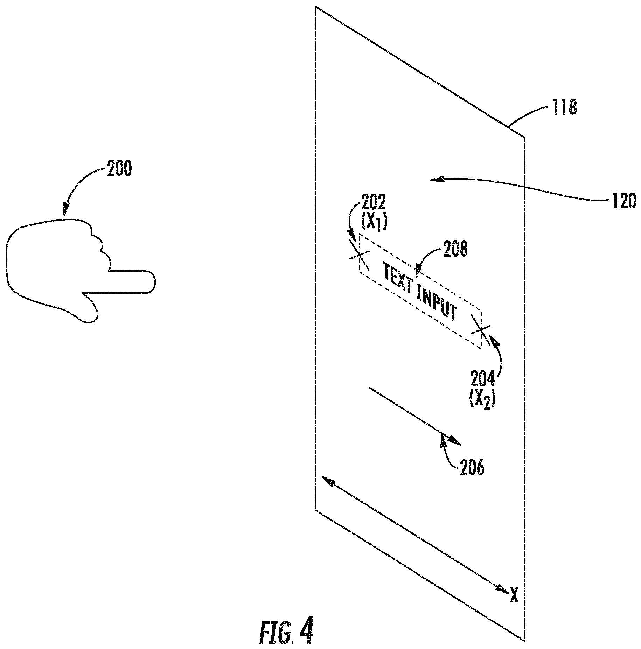

Referring now to FIG. 4, a schematic of an example interaction with a user interface according to example aspects of the present disclosure is provided. Elements that are the same or similar to those shown in FIGS. 2 and 3 are referred to with the same reference numerals. As shown, a user 200 can interact with a user interface 120 displayed on a touch screen display device 118. Additionally, a first touchpoint 202 corresponding to a first touchpoint interaction and associated with a first value X₁, a second touchpoint 204 corresponding to a second touchpoint interaction and associated with a second value X₂, and a directional arrow 206 indicating a relative position of the second touchpoint 204 with respect to the first touchpoint 202 is shown. As shown, the second touchpoint 204 is in a second position (e.g., a position not to the left of the first touchpoint 202), as indicated by the directional arrow 206.

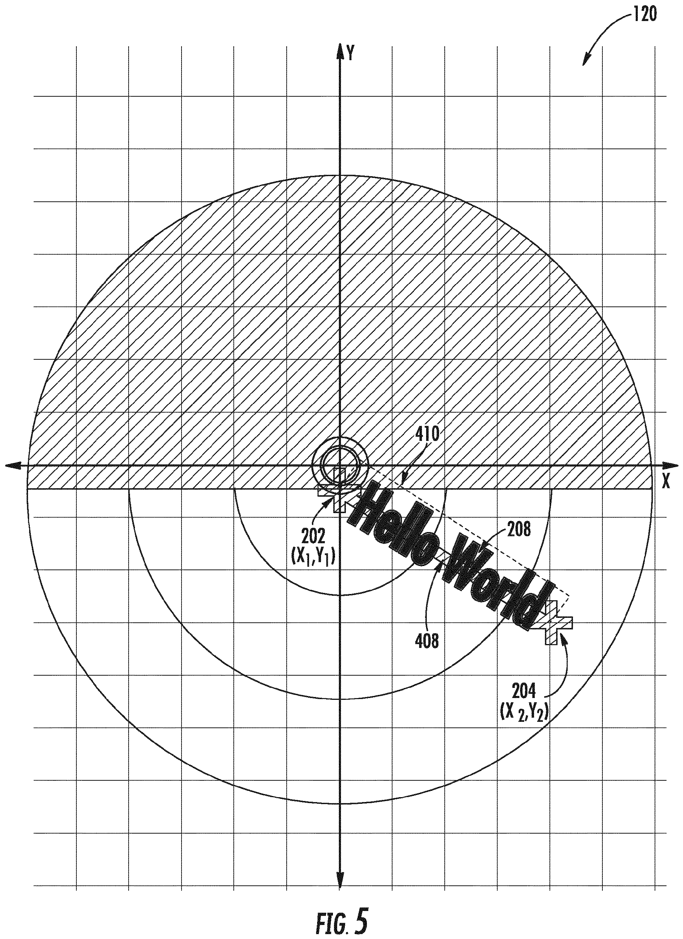

A processor, such as a processor in a control system 130, can be configured to determine whether the second touchpoint 204 is in the first position (e.g., to the left) or the second position (e.g., not to the left) based on the data indicative of the first touchpoint and the data indicative of the second touchpoint. For example, the one or more processors can compare the values of X₁ and X₂. If the second value X₂ is greater than or equal to the first value X₁, the processor can determine that the second touchpoint 204 is in the second position, as shown in FIG. 4. Further, when the second touchpoint 204 is in the second position, the processor can include the text input 208 in the formatted textual display. The processor can send one or more commands to the touch screen display device 118 to display the formatted textual display including the text input 208. For example, as shown, the text input 208 is displayed in the formatted textual display on the touch screen display device 118. Moreover, when the second touchpoint is in the second position (e.g., not to the left), the processor can determine an angular orientation and a format of the text input 208, as will be discussed in greater detail with respect to FIG. 5. For example, the angular orientation can be an orientation on a line extending from the first touchpoint 202 to the second touchpoint 204, and a format of the text input 208 can be a format such that the text input 208 is displayed between the first touchpoint 202 and the second touchpoint 204.

Referring now to FIG. 5, a schematic of an example interaction with a user interface according to example aspects of the present disclosure is provided. Elements that are the same or similar to those shown in FIGS. 2-4 are referred to with the same reference numerals. As depicted, a user interface 120 can be displayed on a touch screen display device 118. The user interface 120 can be a field for receiving one or more touchpoint interactions by a user. The user interface can include, for example, a horizontal axis X and a vertical axis Y. A first touchpoint 202 can be associated with, for example, a first coordinate pair X₁,Y₁. When the user touches the first touchpoint 202, the touch screen display device 118 can be configured to send data indicative of the first touchpoint 202 to one or more processors, such as a processor in a control system 130. For example, the touch screen display device 118 can be configured to send a first coordinate pair X₁,Y₁ associated with the first touchpoint 202 to a processor, and the processor can be configured to receive the first coordinate pair X₁,Y₁.

Similarly, a user can touch the user interface 120 at a second touchpoint 204. The second touchpoint 204 can be, for example a second touchpoint interaction with the touch screen display device 118 occurring at a point in time that occurs after the first touchpoint interaction occurred. The second touchpoint 204 can be associated with a second coordinate pair X₂,Y₂. When the user touches the second touchpoint 204, the touchscreen display device 118 can be configured to send data indicative of the second touchpoint 404 to one or more processors, such as one or more processors in a control system 130. For example, the touch screen display device can be configured to send a second coordinate pair X₂,Y₂ associated with the second touchpoint 204 to a processor, and the processor can be configured to receive the second coordinate pair X₂,Y₂.

The processor can be configured to determine a formatted text input to be displayed in a formatted textual display based on the data indicative of the first touchpoint and the data indicative of the second touchpoint. As depicted, the second touchpoint 204 can be, for example, at the second position relative to the first touchpoint 202 (e.g., not to the left of the first touchpoint 202). For example, a processor can be configured to determine whether the second touchpoint 404 is in a first position relative to the first touchpoint 402, or whether the second touchpoint 404 is in a second position relative to the first touchpoint 404. The first position can be, for example, a position to the left of the first touchpoint, and a second position can be, for example, a position not to the left of the first touchpoint 402, such as a position directly above, directly below, or to the right of the first touchpoint 402. Additionally and/or alternatively, the first position and the second position can be any other configuration of positions relative to the first touchpoint, such as above, below, or to the right.

When the second touchpoint 404 is in the second position relative to the first touchpoint 402 (e.g., not to the left), the one or more processors can determine an angular orientation of a text input 208. In an embodiment, the one or more processors can be configured to determine an angular orientation of a text input 208 based on the data indicative of the first touchpoint 202 and the data indicative of the second touchpoint 204. For example, the one or more processors can be configured to determine a line 408 extending from the first touchpoint 202 to the second touchpoint 204. The one or more processors can, for example, use the first coordinate pair X₁,Y₁ associated with the first touchpoint 202 as a starting point for the line 408 and extend the line to the second coordinate pair X₂,Y₂ associated with the second touchpoint 204. The one or more processors can then orient the text input 208 along the line 408 such that the text input 208 has an angular orientation corresponding to the line 408 between the first coordinate pair X₁,Y₁ and the second coordinate pair X₂,Y₂. In an embodiment, the text input 208 can be oriented along the line 408 such that the text input 208 is centered along the line 408, as depicted in FIG. 5. Additionally and/or alternatively, the text input 208 can be positioned along the line 408 in any configuration, such as above the line 408, below the line 408, or any other position. In this way, the one or more processors can determine an angular orientation of a text input 208.

Further, when the second touchpoint 404 is in the second position relative to the first touchpoint 402 (e.g., not to the left), the one or more processors can determine a format of the text input 208. In an embodiment, the one or more processors can be configured to determine a format of the text input 208 based on the data indicative of the first touchpoint 202 and the data indicative of the second touchpoint 204. For example, the one or more processors can be configured to determine a distance 410 of the line 408 extending from the first touchpoint 202 to the second touchpoint 204.

The distance 410 of the line 408 can be determined by, for example, the Pythagorean Theorem using the first coordinate pair X₁,Y₁ and the second coordinate pair X₂,Y₂ and calculating the length of the hypotenuse corresponding to the line 408.

In an embodiment, the one or more processors can further be configured to determine a format of the text input 208 based at least in part on the distance 410 between the first touchpoint 202 and the second touchpoint 204. For example, the one or more processors can be configured to determine a font size of the text input 208 such that the text input 208 is sized to fit within the space between the first touchpoint 202 and the second touchpoint 204. For example, as shown in FIG. 5, the text input 208 is sized to fit between the first touchpoint 202 and the second touchpoint 204. This can be accomplished by, for example, using known spacing values corresponding to the length of individual text characters from a text input 208 and calculating a combined length of individual text characters corresponding to the text input 208 at different font sizes, and determining a font size corresponding to a text input 208 that is sized to fit within the space between the first touchpoint 202 and the second touchpoint 204. Additionally and/or alternatively, the one or more processors can determine a font size of a text input 208 based on a distance 410 in any number of possible configurations. In an embodiment, a user can input a font sizing preference that can be used by the one or more processors to determine a font size of a text input 208. Additionally and/or alternatively, a default setting for a font size preference (e.g., sized to fit within the touchpoints) can be used by the one or more processors to determine a font size of a text input 208. In this way, the one or more processors can be configured to determine a format of the text input 208, which can include determining a font size of a text input 208.

In an embodiment, the one or more processors can further be configured to determine a font characteristic of a text input 208, such as a font type, a font style, a font effect, or any other displayed font characteristic. For example, the one or more processors can be configured to determine a font style of the text input 208 such that the text input 208 is sized to fit within the space between the first touchpoint 202 and the second touchpoint 204. For example, as shown in FIG. 5, the text input 208 can be formatted with a "bold" styling such that text input 208 is sized to fit between the first touchpoint 202 and the second touchpoint 204. Other font characteristics can similarly be determined by the one or more processors, such as a font type, font effect, or any other displayed font characteristic. In an embodiment, a user can input a font characteristic preference that can be used by the one or more processors to determine a format of a text input 208. Additionally and/or alternatively, a default setting for a font preference (e.g., "Times New Roman" font with "bold" style) can be used by the one or more processors to determine a font size of a text input 208. In this way, the one or more processors can be configured to determine a format of the text input 208, which can include determining a font characteristic of a text input 208.

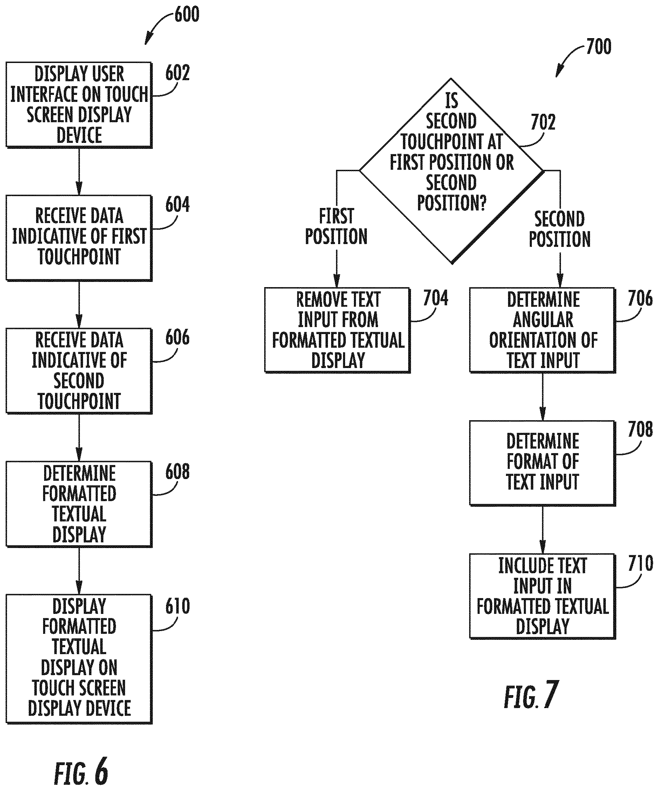

Referring now to FIG. 6, a flow diagram of an example method (600) according to example embodiments of the present disclosure is depicted. The method (600) can be implemented by one or more processors, such as a processor of a control system 130 depicted in FIG. 1. In addition, FIG. 6 depicts steps performed in a particular order for purposes of illustration and discussion. Those of ordinary skill in the art, using the disclosures provided herein, will understand that the various steps of any of the methods disclosed herein can be modified, adapted, expanded, rearranged and/or omitted in various ways without deviating from the scope of the present disclosure.

At (602), the method (600) can include providing for display a user interface on a touch screen display device, the user interface including a field for receiving one or more touchpoint interactions by a user. For example, a user interface 120 can be provided for display on a touch screen display device 118. The user interface 120 can include a field for receiving one or more touchpoint interactions, which can include a horizontal axis and a vertical axis, as depicted in FIG. 5. Each touchpoint interaction can be associated with one or more values or coordinate pairs on the user interface 120, such as an individual value (e.g., X₁ on a horizontal axis) or a coordinate pair (e.g., X₁,Y₁ on a horizontal and vertical axis).

At (604), the method (600) can include receiving data indicative of a first touchpoint interaction on the touch screen display device. For example, a processor in the control system 130 can receive data indicative of a first touchpoint interaction with a touch screen display device 118, such as a first touchpoint 202 depicted in FIG. 5. The first touchpoint interaction can be associated with, for example, a first coordinate pair X₁,Y₁. The data indicative of a first touchpoint interaction can be, for example, the first coordinate pair X₁,Y₁. The touch screen display device 118 can send data indicative of the first touchpoint interaction to the processor of a control system 130 and the processor of the control system 130 can receive the data from the touch screen display device 118.

At (606), the method (600) can include receiving data indicative of a second touchpoint interaction on the touch screen display device. For example, a processor in the control system 130 can receive data indicative of a second touchpoint interaction with a touch screen display device 118, such as a second touchpoint 204 depicted in FIG. 5. The second touchpoint interaction can be associated with, for example, a second coordinate pair X₂,Y2. The data indicative of a second touchpoint interaction can be, for example, the second coordinate pair X₂,Y₂. The touch screen display device 118 can send data indicative of the second touchpoint interaction to the processor of a control system 130 and the processor of the control system 130 can receive the data from the touch screen display device 118.

At (608), the method (600) can include determining a formatted textual display based at least in part on the data indicative of the first touchpoint and the data indicative of the second touchpoint. For example, the processor can determine that a formatted textual display includes a text input 208 oriented at an angular orientation and formatted to fit between a pair of touchpoints, such as a first touchpoint 202 and a second touchpoint 204. Alternatively, a processor can determine that text input 208 can be removed from a formatted textual display.

Referring now to FIG. 7, a method (700) according to example embodiments of the present disclosure is depicted. The method (700) can be used, for example, to determine a formatted textual display by a processor at (608) in a method (600).

At (702), the method can include determining whether the second touchpoint is at a first position or a second position relative to the first touchpoint. For example, a first position can be a position to the left of the first touchpoint 202, and a second position can be a position not to the left of the first touchpoint 202. A processor can determine whether a second touchpoint is in the first position or the second position by, for example, comparing a first value X₁ associated with the first touchpoint 202 along a horizontal axis to a second value X₂ associated with the second touchpoint 204. If the second value X₂ is less than the first value X₁, the processor can determine that the second touchpoint 204 is in the first position. If the second value X₂ is greater than or equal to the first value X₁, the processor can determine that the second touchpoint 204 is in the second position.

If the second touchpoint 204 is in the first position, at (704) the processor can remove the text input from the formatted textual display. For example, a user might input a text input 208 in a user interface 120, as depicted in FIG. 2. The user may decide that they want to delete and/or hide the text input 208, and can touch a touch screen display device at two touchpoints as depicted in FIG. 3, wherein the second touchpoint 204 is in the first position relative to the first touchpoint 202. The processor can remove the text input 208 from the formatted textual display.

If the second touchpoint 204 is in the second position, at (706) the processor can determine an angular orientation of the text input. For example, as depicted in FIG. 5, a processor can determine an angular orientation of a text input 208 such that the text input 208 is oriented along a line extending from a first coordinate pair X₁,Y₁ to a second coordinate pair X₂,Y₂. Additionally and/or alternatively, the method can include determining an angular orientation of a text input 208 such that the text input 208 is oriented in any angular orientation based on the data indicative of a first touchpoint 202 and data indicative of a second touchpoint 204.

Further, at (708), the processor can determine a format of the text input. For example, as depicted FIG. 5, a processor can determine a font size or a font characteristic of a text input 208. The font size can be, for example, a font size such that the text input 208 is displayed in a space between the first touchpoint 204 and the second touchpoint 204. Additionally and/or alternatively, the font size can be any font size determined by the processor based on the data indicative of a first touchpoint 202 and data indicative of a second touchpoint 204. Further, the processor can determine one or more font characteristics of a text input 208, such as a font type, a font style, a font effect, or any other displayed font characteristic. The font characteristic can be, for example, a "bold" font style such that the text input 208 is displayed in a space between the first touchpoint 204 and the second touchpoint 204. Additionally and/or alternatively, the font characteristic can be any font characteristic determined by the processor based on the data indicative of a first touchpoint 202 and data indicative of a second touchpoint 204. The font size and/or the font characteristic of a text input 208 can further be determined based on a user preference as determined by a user input, or can be determined based on a default value.

At (710), the processor can include the text input in the formatted textual display. For example, after determining an angular orientation and a format of a text input 208, the processor can include the formatted, angled text input in a formatted textual display. The processor can be configured to determine one or more signals corresponding to the formatted textual display, and can be configured to send one or more signals to the touch screen display device, such as a touch screen display device 118 depicted in FIG. 5, to display the formatted textual display.

Referring back to FIG. 6, at (610), the method (600) can include displaying the formatted textual display on the touch screen display device. For instance, the processor in a control system 130 can send one or more command signals to a touch screen display device 118 corresponding to a formatted textual display. The touch screen display device 118 can be configured to receive the one or more command signals, and based on the one or more command signals, display the formatted textual display. In this way, the methods (600) and (700) according to example aspects of the present disclosure can format a text input on a touch screen display device.

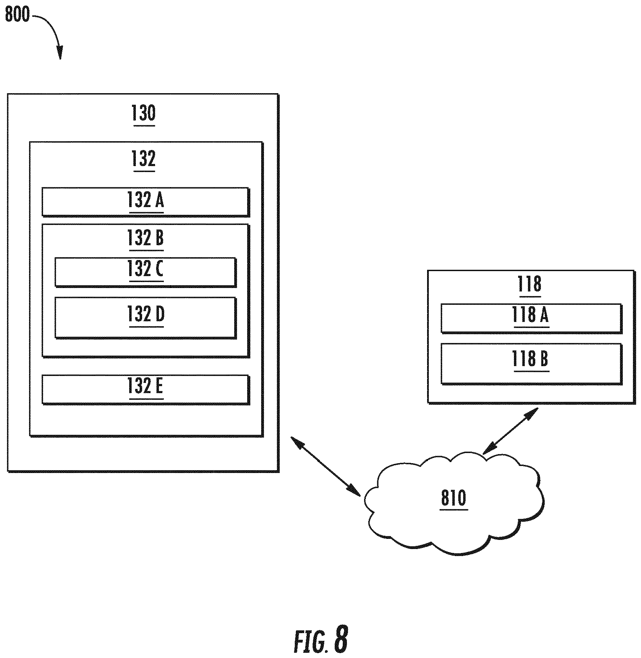

FIG. 8 depicts an example system 800 according to example embodiments of the present disclosure. The system 800 can include a touch screen display device 118 and a computing system 130. The touch screen display device 118 and/or the computing system 130 can be configured to communicate via network 810, which can correspond to any of the communication networks described herein.

The computing system 130 can include one or more computing device(s) 132. The computing device(s) 132 can include one or more processor(s) 132A and one or more memory device(s) 132B. The one or more processor(s) 132A can include any suitable processing device, such as a microprocessor, microcontroller, integrated circuit, logic device, and/or other suitable processing device. The one or more memory device(s) 132B can include one or more computer-readable media, including, but not limited to, non-transitory computer-readable media, RAM, ROM, hard drives, flash drives, and/or other memory devices.

The one or more memory device(s) 132B can store information accessible by the one or more processor(s) 132A, including computer-readable instructions 132C that can be executed by the one or more processor(s) 132A. The instructions 132C can be any set of instructions that when executed by the one or more processor(s) 132A, cause the one or more processor(s) 132A to perform operations. In some embodiments, the instructions 132C can be executed by the one or more processor(s) 132A to cause the one or more processor(s) 132A to perform operations, such as any of the operations and functions for which the computing system 130 and/or the computing device(s) 132 are configured, the operations for formatting a text input on a touch screen display device on an aircraft (e.g., methods 600 and 700), as described herein, and/or any other operations or functions of the one or more computing device(s) 132. The instructions 132C can be software written in any suitable programming language or can be implemented in hardware. Additionally, and/or alternatively, the instructions 132C can be executed in logically and/or virtually separate threads on processor(s) 132A. The memory device(s) 132B can further store data 132D that can be accessed by the processor(s) 132A. For example, the data 132D can include data indicative of a first touchpoint 202, data indicative of a second touchpoint 204, any default formatting preferences, any user input, such as a text input 208 and any user formatting preferences, and/or any other data and/or information described herein.

The computing device(s) 132 can also include a network interface 132E used to communicate, for example, with the other components of system 800 (e.g., via network 810). The network interface 132E can include any suitable components for interfacing with one or more network(s), including for example, transmitters, receivers, ports, controllers, antennas, and/or other suitable components.

The touch screen display device 118 can include one or more processors 118A and one or more memory devices 118B, which can be used to display a formatted text display on the touch screen display device 118, such as when a computing system 130 sends a command to a touch screen display device 118 to display a formatted text display. The touch screen display device 118 can further be configured to receive a user interaction, such as a touchpoint interaction, and provide data indicative of the touch point interaction to the computing system 130.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the present disclosure, including the best mode, and also to enable any person skilled in the art to practice the present disclosure, including making and using any devices or systems and performing any incorporated methods. The patentable scope of the present disclosure is defined by the claims, and can include other examples that occur to those skilled in the art.

## Claims

1. A computer-implemented method (600) of formatting a text input on a touch screen display device (118), comprising:
providing for display (602), by one or more processors (132A), a user interface on a touch screen display device (118), the user interface comprising a field for receiving one or more touchpoint interactions by a user;
receiving (604), by the one or more processors, data indicative of a first touchpoint (202) on the touch screen display device (118);
receiving (606), by the one or more processors, data indicative of a second touchpoint (204) on the touch screen display device (118);
determining (608), by the one or more processors (132A), a formatted textual display based at least in part on the data indicative of the first touchpoint (202) and the data indicative of the second touchpoint (204);
wherein determining the formatted textual display comprises:
determining whether the second touchpoint (204) is located at a first position relative to the first touchpoint (202) or a second position relative to the first touchpoint (202), and
when the second touchpoint (204) is located at the first position relative to the first touchpoint (202), removing the text input from the formatted textual display; or
when the second touchpoint (204) is located at the second position relative to the first touchpoint (202), determining an angular orientation of the text input, including the text input in the formatted textual display, and displaying (610), by the one or more processors (132A), the formatted textual display on the touch screen display device (118);
wherein the data indicative of a first touchpoint (202) is associated with a first coordinate pair on a vertical axis and a horizontal axis, wherein the data indicative of a second touchpoint (204) is associated with a second coordinate pair on the vertical and the horizontal axis, wherein determining the angular orientation comprises orienting the text input along a line extending from the first coordinate pair to the second coordinate pair; and wherein:
the first position is any position to the left of the first touchpoint (202) and the second position is any position not to the left of the first touchpoint (202); or
the first position is any position to the right of the first touchpoint (202) and the second position is any position not to the right of the first touchpoint (202); or
the first position is any position above the first touchpoint (202) and the second position is any position not above the first touchpoint (202); or
the first position is any position below the first touchpoint (202) and the second position is any position not below the first touchpoint (202).

2. The method of claim 1, wherein the data indicative of a first touchpoint (202) is associated with a first value along a horizontal axis, wherein the data indicative of a second touchpoint (204) is associated with a second value along the horizontal axis, wherein the first position is a position to the left of the first touchpoint (202) when the second value is less than the first value, wherein the second position is a position not to the left of the first touchpoint (202) when the second value is greater than or equal to the first value.

3. The method of claim 1 or 2, wherein determining, by the one or more processors, a formatted textual display further comprises determining a format of the text input.

4. The method of claim 3, wherein the data indicative of a first touchpoint (202) comprises a first coordinate pair on a vertical axis and a horizontal axis, wherein the data indicative of a second touchpoint (204) comprises a second coordinate pair on the vertical and the horizontal axis, wherein the format of the text input is determined based at least in part on the distance between the first touchpoint (202) and the second touchpoint (204).

5. The method of either of claim 3 or 4, wherein determining the format of the text input comprises determining a font size or a font characteristic.

6. The method of claim 1, wherein removing the text input from the formatted textual display when the second touchpoint is located at the first position relative to the first touchpoint comprises:
deleting the text input; or
hiding the text input.

7. A system for formatting text on a touch screen display device (118), comprising:
a touch screen display device (118);
one or more processors (132A); and
one or more memory devices (132B), the one or more memory devices (132B) storing instructions that when executed by the one or more processors (132A) configure the one or more processors (132A) to:
display a user interface (602) on the touch screen display device (118), the user interface comprising a field for receiving one or more touchpoint interactions by a user;
receive (604) data indicative of a first touchpoint (202) on the touch screen display device (118);
receive (606) data indicative of a second touchpoint (204) on the touch screen display device (118);
determine (608) a formatted textual display based at least in part on the data indicative of the first touchpoint (202) and the data indicative of the second touchpoint (204);
wherein determining the formatted textual display comprises:
determining whether the second touchpoint (204) is located at a first position relative to the first touchpoint (202) or a second position relative to the first touchpoint (202), and
when the second touchpoint (204) is located at the first position relative to the first touchpoint (202), removing the text input from the formatted textual display; or
when the second touchpoint (204) is located at the second position relative to the first touchpoint (202), determining an angular orientation of the text input, including the text input in the formatted textual display, and displaying (610) the formatted textual display on the touch screen display device (118);
wherein the data indicative of a first touchpoint (202) is associated with a first coordinate pair on a vertical axis and a horizontal axis, wherein the data indicative of a second touchpoint (204) is associated with a second coordinate pair on the vertical and the horizontal axis, wherein determining the angular orientation comprises orienting the text input along a line extending from the first coordinate pair to the second coordinate pair; and wherein:
the first position is any position to the left of the first touchpoint (202) and the second position is any position not to the left of the first touchpoint (202); or
the first position is any position to the right of the first touchpoint (202) and the second position is any position not to the right of the first touchpoint (202); or
the first position is any position above the first touchpoint (202) and the second position is any position not above the first touchpoint (202); or
the first position is any position below the first touchpoint (202) and the second position is any position not below the first touchpoint (202).

## Patentansprüche

1. Computerimplementiertes Verfahren (600) zum Formatieren einer Texteingabe auf einer Berührungsbildschirm-Anzeigevorrichtung (118), Folgendes umfassend:
Bereitstellen des Anzeigens (602), durch einen oder mehrere Prozessoren (132A), einer Benutzeroberfläche auf einer Berührungsbildschirm-Anzeigevorrichtung (118), wobei die Benutzeroberfläche ein Feld zum Empfangen einer oder mehrerer Berührungspunktinteraktionen durch einen Benutzer umfasst;
Empfangen (604), durch den einen oder die mehreren Prozessoren, von Daten, die einen ersten Berührungspunkt (202) auf der Berührungsbildschirm-Anzeigevorrichtung (118) angeben;
Empfangen (606), durch den einen oder die mehreren Prozessoren, von Daten, die einen zweiten Berührungspunkt (204) auf der Berührungsbildschirm-Anzeigevorrichtung (118) angeben;
Bestimmen (608), durch den einen oder die mehreren Prozessoren (132A), einer formatierten Textanzeige, wenigstens teilweise basierend auf den Daten, die den ersten Berührungspunkt (202) angeben, und den Daten, die den zweiten Berührungspunkt (204) angeben;
wobei das Bestimmen der formatierten Textanzeige Folgendes umfasst:
Bestimmen, ob sich der zweite Berührungspunkt (204) an einer ersten Position relativ zu dem ersten Berührungspunkt (202) oder an einer zweiten Position relativ zu dem ersten Berührungspunkt (202) befindet und,
wenn sich der zweite Berührungspunkt (204) an der ersten Position relativ zu dem ersten Berührungspunkt (202) befindet, Entfernen der Texteingabe von der formatierten Textanzeige; oder
wenn sich der zweite Berührungspunkt (204) an der zweiten Position relativ zu dem ersten Berührungspunkt (202) befindet, Bestimmen einer Winkelausrichtung der Texteingabe, einschließlich der Texteingabe in der formatierten Textanzeige, und Anzeigen (610), durch den einen oder die mehreren Prozessoren (132A), der formatierten Textanzeige auf der Berührungsbildschirm-Anzeigevorrichtung (118);
wobei die Daten, die einen ersten Berührungspunkt (202) angeben, einem ersten Koordinatenpaar auf einer vertikalen Achse und einer horizontalen Achse zugehörig sind, wobei die Daten, die einen zweiten Berührungspunkt (204) angeben, einem zweiten Koordinatenpaar auf der vertikalen und der horizontalen Achse zugehörig sind, wobei das Bestimmen der Winkelausrichtung das Ausrichten der Texteingabe entlang einer Linie, die sich von dem ersten Koordinatenpaar zu dem zweiten Koordinatenpaar erstreckt, umfasst; und wobei:
die erste Position eine beliebige Position links von dem ersten Berührungspunkt (202) ist und die zweite Position eine beliebige Position nicht links von dem ersten Berührungspunkt (202) ist; oder
die erste Position eine beliebige Position rechts von dem ersten Berührungspunkt (202) ist und die zweite Position eine beliebige Position nicht rechts von dem ersten Berührungspunkt (202) ist; oder
die erste Position eine beliebige Position oberhalb des ersten Berührungspunkts (202) ist und die zweite Position eine beliebige Position nicht oberhalb des ersten Berührungspunkts (202) ist; oder
die erste Position eine beliebige Position unterhalb des ersten Berührungspunkts (202) ist und die zweite Position eine beliebige Position nicht unterhalb des ersten Berührungspunkts (202) ist.

2. Verfahren nach Anspruch 1, wobei die Daten, die einen ersten Berührungspunkt (202) angeben, einem ersten Wert entlang einer horizontalen Achse zugehörig sind, wobei die Daten, die einen zweiten Berührungspunkt (204) angeben, einem zweiten Wert entlang der horizontalen Achse zugehörig sind, wobei die erste Position eine Position links von dem ersten Berührungspunkt (202) ist, wenn der zweite Wert kleiner als der erste Wert ist, wobei die zweite Position eine Position nicht links von dem ersten Berührungspunkt (202) ist, wenn der zweite Wert wenigstens der erste Wert ist.

3. Verfahren nach Anspruch 1 oder 2, wobei das Bestimmen, durch den einen oder die mehreren Prozessoren, einer formatierten Textanzeige ferner das Bestimmen eines Formats der Texteingabe umfasst.

4. Verfahren nach Anspruch 3, wobei die Daten, die einen ersten Berührungspunkt (202) angeben, ein erstes Koordinatenpaar auf einer vertikalen Achse und einer horizontalen Achse umfassen, wobei die Daten, die einen zweiten Berührungspunkt (204) angeben, ein zweites Koordinatenpaar auf der vertikalen und der horizontalen Achse umfassen, wobei das Format der Texteingabe wenigstens teilweise basierend auf dem Abstand zwischen dem ersten Berührungspunkt (202) und dem zweiten Berührungspunkt (204) bestimmt wird.

5. Verfahren nach Anspruch 3 oder 4, wobei das Bestimmen des Formats der Texteingabe das Bestimmen einer Schriftgröße oder eines Schriftmerkmals umfasst.

6. Verfahren nach Anspruch 1, wobei das Entfernen der Texteingabe von der formatierten Textanzeige, wenn sich der zweite Berührungspunkt an der ersten Position relativ zu dem ersten Berührungspunkt befindet, Folgendes umfasst:
Löschen der Texteingabe; oder
Ausblenden der Texteingabe.

7. System zum Formatieren von Text auf einer Berührungsbildschirm-Anzeigevorrichtung (118), Folgendes umfassend:
eine Berührungsbildschirm-Anzeigevorrichtung (118);
einen oder mehrere Prozessoren (132A); und
eine oder mehrere Speichervorrichtungen (132B), wobei in der einen oder den mehreren Speichervorrichtungen (132B) Anweisungen gespeichert sind, die, wenn sie durch den einen oder die mehreren Prozessoren (132A) ausgeführt werden, den einen oder die mehreren Prozessoren (132A) für Folgendes konfigurieren:
Anzeigen einer Benutzeroberfläche (602) auf der Berührungsbildschirm-Anzeigevorrichtung (118), wobei die Benutzeroberfläche ein Feld zum Empfangen einer oder mehrerer Berührungspunktinteraktionen durch einen Benutzer umfasst;
Empfangen (604) von Daten, die einen ersten Berührungspunkt (202) auf der Berührungsbildschirm-Anzeigevorrichtung (118) angeben;
Empfangen (606) von Daten, die einen zweiten Berührungspunkt (204) auf der Berührungsbildschirm-Anzeigevorrichtung (118) angeben;
Bestimmen (608) einer formatierten Textanzeige, wenigstens teilweise basierend auf den Daten, die den ersten Berührungspunkt (202) angeben, und den Daten, die den zweiten Berührungspunkt (204) angeben;
wobei das Bestimmen der formatierten Textanzeige Folgendes umfasst:
Bestimmen, ob sich der zweite Berührungspunkt (204) an einer ersten Position relativ zu dem ersten Berührungspunkt (202) oder an einer zweiten Position relativ zu dem ersten Berührungspunkt (202) befindet und,
wenn sich der zweite Berührungspunkt (204) an der ersten Position relativ zu dem ersten Berührungspunkt (202) befindet, Entfernen der Texteingabe von der formatierten Textanzeige; oder
wenn sich der zweite Berührungspunkt (204) an der zweiten Position relativ zu dem ersten Berührungspunkt (202) befindet, Bestimmen einer Winkelausrichtung der Texteingabe, einschließlich der Texteingabe in der formatierten Textanzeige, und Anzeigen (610) der formatierten Textanzeige auf der Berührungsbildschirm-Anzeigevorrichtung (118);
wobei die Daten, die einen ersten Berührungspunkt (202) angeben, einem ersten Koordinatenpaar auf einer vertikalen Achse und einer horizontalen Achse zugehörig sind, wobei die Daten, die einen zweiten Berührungspunkt (204) angeben, einem zweiten Koordinatenpaar auf der vertikalen und der horizontalen Achse zugehörig sind, wobei das Bestimmen der Winkelausrichtung das Ausrichten der Texteingabe entlang einer Linie, die sich von dem ersten Koordinatenpaar zu dem zweiten Koordinatenpaar erstreckt, umfasst; und wobei:
die erste Position eine beliebige Position links von dem ersten Berührungspunkt (202) ist und die zweite Position eine beliebige Position nicht links von dem ersten Berührungspunkt (202) ist; oder
die erste Position eine beliebige Position rechts von dem ersten Berührungspunkt (202) ist und die zweite Position eine beliebige Position nicht rechts von dem ersten Berührungspunkt (202) ist; oder
die erste Position eine beliebige Position oberhalb des ersten Berührungspunkts (202) ist und die zweite Position eine beliebige Position nicht oberhalb des ersten Berührungspunkts (202) ist; oder
die erste Position eine beliebige Position unterhalb des ersten Berührungspunkts (202) ist und die zweite Position eine beliebige Position nicht unterhalb des ersten Berührungspunkts (202) ist.

## Revendications

1. Procédé (600) mis en œuvre par ordinateur de formatage d'une entrée de texte sur un dispositif d'affichage à écran tactile (118), comprenant :
la fourniture de l'affichage (602), par un ou plusieurs processeurs (132A), d'une interface utilisateur sur un dispositif d'affichage à écran tactile (118), l'interface utilisateur comprenant un champ pour recevoir une ou plusieurs interactions de points de contact par un utilisateur ;
la réception (604), par le ou les processeurs, de données indiquant un premier point de contact (202) sur le dispositif d'affichage à écran tactile (118) ;
la réception (606), par le ou les processeurs, de données indiquant un second point de contact (204) sur le dispositif d'affichage à écran tactile (118) ;
la détermination (608), par le ou les processeurs (132A), d'un affichage textuel formaté basé au moins en partie sur les données indiquant le premier point de contact (202) et les données indiquant le second point de contact (204) ;
dans lequel la détermination de l'affichage textuel formaté comprend :
la détermination de si le second point de contact (204) est situé à une première position par rapport au premier point de contact (202) ou à une seconde position par rapport au premier point de contact (202), et lorsque le second point de contact (204) est situé à la première position par rapport au premier point de contact (202), la suppression de l'entrée de texte de l'affichage textuel formaté ; ou
lorsque le second point de contact (204) est situé à la seconde position par rapport au premier point de contact (202), la détermination d'une orientation angulaire de l'entrée de texte, l'inclusion de l'entrée de texte dans l'affichage textuel formaté, et l'affichage (610), par le ou les processeurs (132A), de l'affichage textuel formaté sur le dispositif d'affichage à écran tactile (118) ;
dans lequel les données indiquant un premier point de contact (202) sont associées à une première paire de coordonnées sur un axe vertical et un axe horizontal, dans lequel les données indiquant un second point de contact (204) sont associées à une seconde paire de coordonnées sur l'axe vertical et l'axe horizontal, dans lequel la détermination de l'orientation angulaire comprend l'orientation de l'entrée de texte le long d'une ligne s'étendant de la première paire de coordonnées à la seconde paire de coordonnées ; et
dans lequel :
la première position est n'importe quelle position à gauche du premier point de contact (202) et la seconde position est n'importe quelle position autre qu'à gauche du premier point de contact (202) ; ou
la première position est n'importe quelle position à droite du premier point de contact (202) et la seconde position est n'importe quelle position autre qu'à droite du premier point de contact (202) ; ou
la première position est n'importe quelle position au-dessus du premier point de contact (202) et la seconde position est n'importe quelle position autre qu'au-dessus du premier point de contact (202) ; ou
la première position est n'importe quelle position en dessous du premier point de contact (202) et la seconde position est n'importe quelle position autre qu'en dessous du premier point de contact (202).

2. Procédé selon la revendication 1, selon lequel les données indiquant un premier point de contact (202) sont associées à une première valeur le long d'un axe horizontal, dans lequel les données indiquant un second point de contact (204) sont associées à une seconde valeur le long de l'axe horizontal, dans lequel la première position est une position à gauche du premier point de contact (202) lorsque la seconde valeur est inférieure à la première valeur, dans lequel la seconde position est une position autre qu'à gauche du premier point de contact (202) lorsque la seconde valeur est supérieure ou égale à la première valeur.

3. Procédé selon la revendication 1 ou 2, selon lequel la détermination, par le ou les processeurs, d'un affichage textuel formaté comprend en outre la détermination d'un format de l'entrée de texte.

4. Procédé selon la revendication 3, selon lequel les données indiquant un premier point de contact (202) comprennent une première paire de coordonnées sur un axe vertical et un axe horizontal, dans lequel les données indiquant un second point de contact (204) comprennent une seconde paire de coordonnées sur l'axe vertical et l'axe horizontal, dans lequel le format de l'entrée de texte est déterminé sur la base au moins en partie de la distance entre le premier point de contact (202) et le second point de contact (204).

5. Procédé selon l'une des revendications 3 ou 4, selon lequel la détermination du format de l'entrée de texte comprend la détermination d'une taille de police ou d'une caractéristique de police.

6. Procédé selon la revendication 1, selon lequel la suppression de l'entrée de texte de l'affichage textuel formaté lorsque le second point de contact est situé à la première position par rapport au premier point de contact comprend :
la suppression de l'entrée de texte ; ou
le masquage de l'entrée de texte.

7. Système de formatage de texte sur un dispositif d'affichage à écran tactile (118), comprenant :
un dispositif d'affichage à écran tactile (118) ;
un ou plusieurs processeurs (132A) ; et
un ou plusieurs dispositifs de mémoire (132B), le ou les dispositifs de mémoire (132B) stockant des instructions qui, lorsqu'elles sont exécutées par le ou les processeurs (132A), configurent le ou les processeurs (132A) pour :
afficher une interface utilisateur (602) sur le dispositif d'affichage à écran tactile (118), l'interface utilisateur comprenant un champ pour recevoir une ou plusieurs interactions de points de contact par un utilisateur ;
recevoir (604) des données indiquant un premier point de contact (202) sur le dispositif d'affichage à écran tactile (118) ;
recevoir (606) des données indiquant un second point de contact (204) sur le dispositif d'affichage à écran tactile (118) ;
déterminer (608) un affichage textuel formaté basé au moins en partie sur les données indiquant le premier point de contact (202) et les données indiquant le second point de contact (204) ;
dans lequel la détermination de l'affichage textuel formaté comprend :
la détermination de si le second point de contact (204) est situé à une première position par rapport au premier point de contact (202) ou à une seconde position par rapport au premier point de contact (202), et lorsque le second point de contact (204) est situé à la première position par rapport au premier point de contact (202), la suppression de l'entrée de texte de l'affichage textuel formaté ; ou
lorsque le second point de contact (204) est situé à la seconde position par rapport au premier point de contact (202), la détermination d'une orientation angulaire de l'entrée de texte, l'inclusion de l'entrée de texte dans l'affichage textuel formaté, et l'affichage (610) de l'affichage textuel formaté sur le dispositif d'affichage à écran tactile (118) ;
dans lequel les données indiquant un premier point de contact (202) sont associées à une première paire de coordonnées sur un axe vertical et un axe horizontal, dans lequel les données indiquant un second point de contact (204) sont associées à une seconde paire de coordonnées sur l'axe vertical et l'axe horizontal, dans lequel la détermination de l'orientation angulaire comprend l'orientation de l'entrée de texte le long d'une ligne s'étendant de la première paire de coordonnées à la seconde paire de coordonnées ; et
dans lequel :
la première position est n'importe quelle position à gauche du premier point de contact (202) et la seconde position est n'importe quelle position autre qu'à gauche du premier point de contact (202) ; ou
la première position est n'importe quelle position à droite du premier point de contact (202) et la seconde position est n'importe quelle position autre qu'à droite du premier point de contact (202) ; ou
la première position est n'importe quelle position au-dessus du premier point de contact (202) et la seconde position est n'importe quelle position autre qu'au-dessus du premier point de contact (202) ; ou
la première position est n'importe quelle position en dessous du premier point de contact (202) et la seconde position est n'importe quelle position autre qu'en dessous du premier point de contact (202).
